# FASCICULE DE BREVET EUROPEEN

(11) **EP 2 643 515 B1**
(45) Date de publication et mention de la délivrance du brevet: **02.09.2015**
(21) Numéro de dépôt: 11782168.6
(22) Date de dépôt: 16.11.2011
(51) Int. Cl.: D07B 1/06, D02G 3/48, C09D 125/08

(54) **RENFORT COMPOSITE AUTO-ADHERENT**
SELBSTKLEBENDE VERBUNDSTOFFVERSTÄRKUNG
AUTO-ADHESIVE COMPOSITE REINFORCEMENT

(30) Priorité: 22.11.2010 FR 1059572
(43) Date de publication de la demande: 02.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ABAD, Vincent, F-63040 Clermont-Ferrand Cedex 9 (FR); RIGO, Sébastien, F-63040 Clermont-Ferrand Cedex 9 (FR); CUSTODERO, Emmanuel, F-63040 Clermont-Ferrand Cedex 9 (FR)
(74) Mandataire: Desbordes, Guillaume
(86) Numéro de dépôt international: PCT/EP2011/070247
(87) Numéro de publication internationale: WO 2012/069346

(56) Documents cités:
- EP-A1- 2 070 952
- WO-A1-2010/105975
- WO-A1-2012/016757
- FR-A1- 2 965 209
- US-A- 4 754 794
- ARAI Y ET AL: "Wear-resistant, heat resistant, flame retardant resin composition for covering wire of motor vehicle, comprises polybutylene terephthalate, styrene group elastomer and nitrogen-containing compound", WPI / THOMSON,, vol. 2003, no. 77, 12 août 2003 (2003-08-12), XP002633218, -& JP 2003 226798 A (SUMITOMO WIRING SYSTEMS) 12 août 2003 (2003-08-12)

## Description

### DOMAINE DE L'INVENTION

Le domaine de la présente invention est celui des éléments de renforcement ou « renforts », notamment métalliques, utilisables pour renforcer des articles ou produits semi-finis en caoutchouc diène tels que par exemple des bandages pneumatiques.

La présente invention est plus particulièrement relative à des renforts de type hybride ou composite constitués d'au moins une âme, en particulier métallique, ladite âme étant recouverte ou gainée d'une couche ou gaine de matière thermoplastique.

### ETAT DE LA TECHNIQUE

Le gainage de renforts métalliques par des matières thermoplastiques tels que par exemple polyamide ou polyester est connu depuis fort longtemps, notamment afin de protéger ces renforts contre diverses agressions externes tels qu'oxydation ou abrasion, ou encore en vue de rigidifier structurellement, solidariser entre eux divers ensembles de fils ou assemblages de fils tels que des câbles, et ainsi augmenter notamment leur résistance au flambage.

De tels renforts composites, ainsi que leur utilisation dans des articles en caoutchouc tels que des bandages pneumatiques, ont été décrits dans de nombreux documents brevet.

La demande de brevet EP 0 962 562 a décrit par exemple un renfort en acier ou en textile aramide gainé par une matière thermoplastique telle que polyester ou polyamide, en vue d'améliorer sa résistance à l'abrasion.

La demande de brevet FR 2 601 293 a décrit le gainage d'un câble métallique avec du polyamide pour l'utiliser comme tringle dans un bourrelet de bandage pneumatique, ce gainage permettant avantageusement d'adapter la forme de cette tringle à la structure et aux conditions de fonctionnement du bourrelet du bandage pneumatique qu'elle renforce.

Les documents brevet FR 2 576 247 ou US 4 754 794 ont également décrit des fils ou câbles métalliques utilisables comme tringle dans un bourrelet de bandage pneumatique, ces fils ou câbles étant doublement voire triplement gainés par deux, respectivement trois matières thermoplastiques différentes (e.g. polyamides) ayant des températures de fusion différentes, en vue d'une part de contrôler la distance entre ces fils ou câbles, d'autre part de supprimer les risques d'usure par frottement ou de corrosion, pour les utiliser comme tringle dans un bourrelet de bandage pneumatique.

Ces renforts ainsi gainés de matière polyester ou polyamide présentent, outre les avantages précités de résistance à la corrosion, de résistance à l'abrasion et de rigidité structurelle, celui non négligeable de pouvoir être ensuite collés à des matrices de caoutchouc diénique en utilisant de simples colles textiles dites "RFL" (résorcinol-formaldéhyde-latex) comportant au moins un élastomère diénique tel que du caoutchouc naturel, colles qui de manière connue confèrent une adhésion satisfaisante entre des fibres textiles tels que fibres en polyester ou polyamide et un caoutchouc diénique.

Ainsi, peuvent être utilisés avantageusement des renforts métalliques non revêtus de couches métalliques adhésives tels que laiton, ainsi que des matrices de caoutchouc environnantes dépourvues de sels métalliques tels que sels de cobalt, nécessaires de manière connue au maintien des performances adhésives au cours du temps mais augmentant significativement d'une part le coût des matrices de caoutchouc elles-mêmes, d'autre part leur sensibilité à l'oxydation et au vieillissement (voir par exemple demande WO 2005/113666).

Toutefois, les colles RFL ci-dessus ne sont pas dépourvues d'inconvénient ; elles comportent en particulier comme substance de base le formaldéhyde (ou formol) qu'il est souhaitable de supprimer à terme des compositions adhésives, en raison de l'évolution récente de la réglementation européenne sur ce type de produit. D'autres solutions ont été divulguées dans le document WO2010/105975.

Ainsi, les concepteurs d'articles en caoutchouc diénique, notamment les manufacturiers de bandages pneumatiques sont à la recherche aujourd'hui de nouveaux systèmes adhésifs ou de nouveaux renforts qui permettent de pallier tout ou partie des inconvénients précités.

### BREVE DESCRIPTION DE L'INVENTION

Or, au cours de leurs recherches, les Demanderesses ont découvert un renfort composite nouveau qui ne nécessite aucun traitement d'encollage pour adhérer au caoutchouc, en quelque sorte du type auto-adhérent par cuisson, et qui par conséquent permet de répondre à l'objectif ci-dessus.

En conséquence, un premier objet de l'invention concerne un renfort composite comportant :
- un ou plusieurs fil(s) de renforcement ;
- recouvrant ledit fil, individuellement chaque fil ou collectivement plusieurs fils, une couche d'une composition polymère thermoplastique comportant d'une part un polymère thermoplastique dont la température de transition vitreuse est positive, d'autre part un élastomère thermoplastique styrénique insaturé fonctionnalisé, dont la température de transition vitreuse est négative, ledit élastomère étant porteur de groupes fonctionnels choisis parmi les groupes époxyde, carboxyle, anhydride ou ester d'acide.

On a constaté de manière inattendue que la présence de cet élastomère thermoplastique styrénique insaturé et fonctionnalisé permettait d'assurer une adhésion directe (c'est-à-dire sans colle RFL ni tout autre adhésif) et particulièrement performante du renfort composite de l'invention, à une matrice ou composition d'élastomère diénique telle que celles couramment utilisées dans des bandages pneumatiques.

L'invention concerne également un procédé de fabrication du renfort composite ci-dessus, ledit procédé étant caractérisé en ce qu'on gaine individuellement le fil ou chaque fil de renforcement, ou collectivement plusieurs fils de renforcement, avec une couche de composition polymère thermoplastique comportant d'une part un polymère thermoplastique dont la température de transition vitreuse est positive, d'autre part un élastomère thermoplastique styrénique insaturé fonctionnalisé, dont la température de transition vitreuse est négative, ledit élastomère étant porteur de groupes fonctionnels choisis parmi les groupes époxyde, carboxyle, anhydride ou ester d'acide.

La présente invention concerne également l'utilisation du renfort composite de l'invention comme élément de renforcement d'articles ou produits semi-finis en caoutchouc, particulièrement de bandages pneumatiques, notamment ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout article ou produit semi-fini en caoutchouc, en particulier bandage pneumatique, comportant un renfort composite selon l'invention.

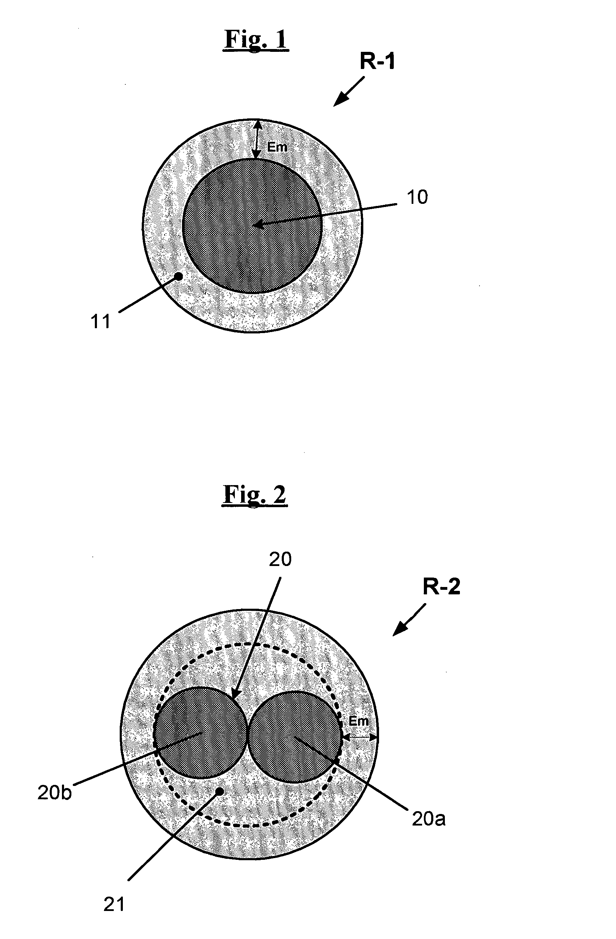

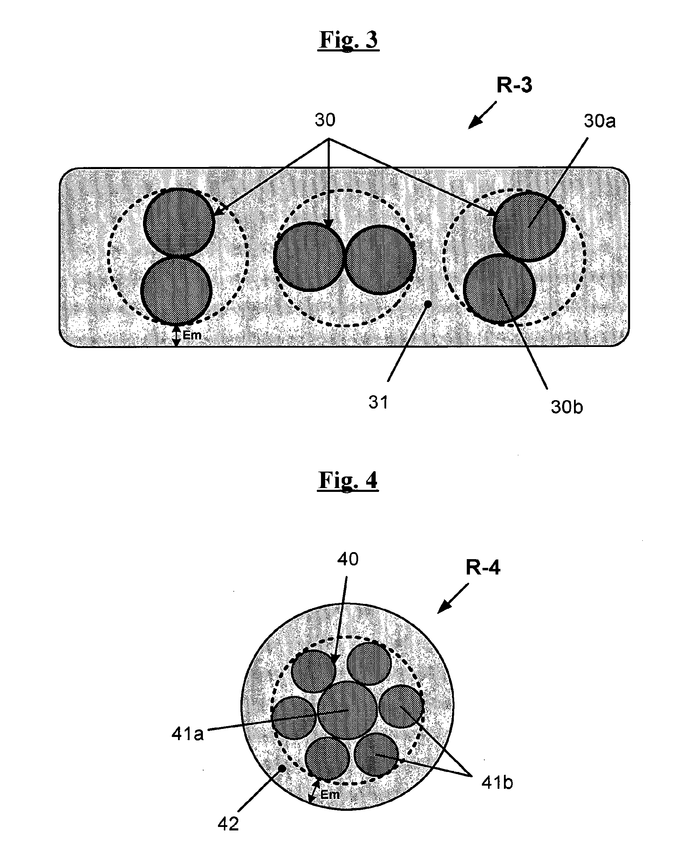

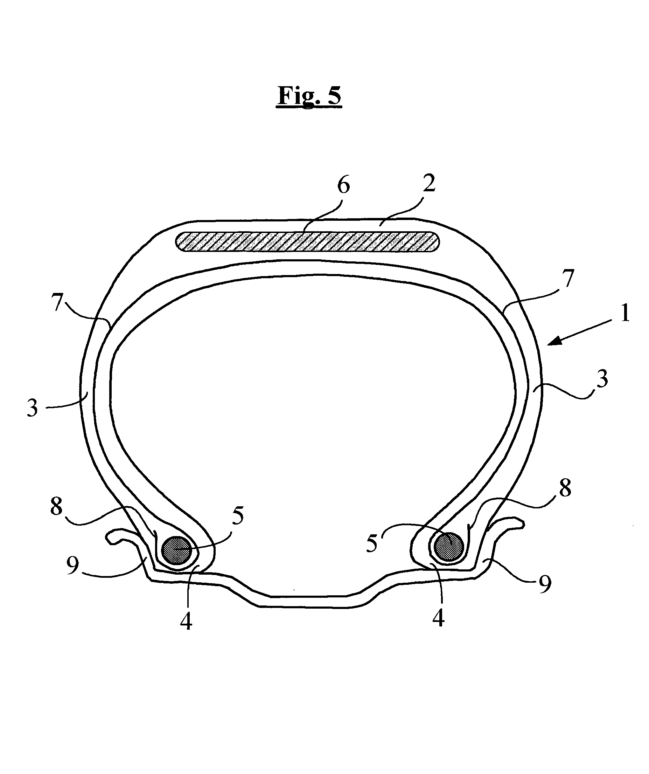

L'invention ainsi que ses avantages seront aisément compris à la lumière de la description et des exemples de réalisation qui suivent, ainsi que des figures relatives à ces exemples qui schématisent :
- en coupe transversale, un exemple d'un renfort composite selon l'invention (Fig. 1) ;
- en coupe transversale, un autre exemple d'un renfort conforme à l'invention (Fig. 2) ;
- en coupe transversale, un autre exemple d'un renfort conforme à l'invention (Fig. 3) ;
- en coupe transversale, un autre exemple d'un renfort conforme à l'invention (Fig. 4) ;
- en coupe radiale, un bandage pneumatique à armature de carcasse radiale conforme à l'invention, incorporant un renfort composite selon l'invention (Fig. 5).

### DESCRIPTION DETAILLEE DE L'INVENTION

Dans la présente description, sauf indication expresse différente, tous les pourcentages (%) indiqués sont des pourcentages en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le renfort composite de l'invention, susceptible d'adhérer directement par cuisson à une composition de caoutchouc insaturé, et utilisable notamment pour le renforcement d'articles en caoutchouc diène tels que des bandages pneumatiques, a donc pour caractéristiques essentielles de comporter :
- au moins un fil (c'est-à-dire un ou plusieurs fils) de renforcement ;
- recouvrant individuellement ledit fil, chaque fil ou collectivement plusieurs fils, une couche d'une composition polymère thermoplastique comportant d'une part un polymère thermoplastique dont la température de transition vitreuse (notée ci-après Tg₁) est positive (c'est-à-dire supérieure à 0°C), d'autre part un élastomère thermoplastique styrénique insaturé fonctionnalisé, dont la température de transition vitreuse (notée ci-après Tg₂) est négative (c'est-à-dire inférieure à 0°C), ledit élastomère étant porteur de groupes fonctionnels choisis parmi les groupes époxyde, carboxyle, anhydride ou ester d'acide.

En d'autres termes, le renfort composite de l'invention comporte un seul fil ou plusieurs fils de renforcement, chaque fil de renforcement étant recouvert par une couche (monocouche) ou gaine de composition polymère thermoplastique. La structure du renfort de l'invention est décrite en détail ci-après.

Dans la présente demande, on entend de manière générale par fil de renforcement (*"reinforcing thread"*) tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé.

Ce fil de renforcement peut prendre tout forme connue, il peut d'agir par exemple d'un monofilament élémentaire de diamètre important (par exemple et de préférence égal ou supérieur à 50 µm), d'un ruban élémentaire, d'une fibre multifilamentaire (constituée d'une pluralité de filaments élémentaires de faible diamètre, typiquement inférieur à 30 µm), d'un retors textile formé de plusieurs fibres retordues ensemble, d'un câble textile ou métallique formé de plusieurs fibres ou monofilaments câblés ou retordus ensemble, ou encore d'une bande ou bandelette comportant plusieurs de ces monofilaments, fibres, retors ou câbles regroupés ensemble, par exemple alignés selon une direction principale, rectiligne ou pas.

Le fil ou chaque fil de renforcement a un diamètre qui est préférentiellement inférieur à 5 mm, notamment compris dans un domaine de 0,1 à 2 mm.

De préférence, le fil de renforcement est un fil de renforcement métallique, notamment en acier au carbone tel que ceux utilisés dans les câbles type *"steel cords*" pour pneumatiques ; mais il est bien entendu possible d'utiliser d'autres aciers, par exemple des aciers inoxydables. Lorsqu'un acier au carbone est utilisé, sa teneur en carbone est de préférence comprise entre 0,4% et 1,2%, notamment entre 0,5% et 1,1%. L'invention s'applique en particulier à tout acier du type *steel cord* à résistance standard (dit "NT" pour *" Normal Tensile "*), à haute résistance (dit "HT" pour *" High Tensile "*), à très haute résistance (dit "SHT" pour " *Super High Tensile "*) comme à ultra-haute résistance (dit "UHT" pour *" Ultra High Tensile* ").

L'acier pourrait être revêtu d'une couche adhésive telle que du laiton ou du zinc. Toutefois, on peut avantageusement utiliser un acier clair, c'est-à-dire non revêtu. En outre, grâce à l'invention, la composition de caoutchouc destinée à être renforcée par un renfort métallique selon l'invention ne nécessite plus l'emploi dans sa formulation de sels métalliques tels que des sels de cobalt.

La composition de polymère thermoplastique constituant la couche ou gaine ci-dessus comporte tout d'abord un polymère thermoplastique dont la Tg (notée Tg₁) est par définition positive, de préférence supérieure à +20°C, plus préférentiellement supérieure à +30°C. D'autre part, la température de fusion (notée Tf) de ce polymère thermoplastique est préférentiellement supérieure à 100°C, plus préférentiellement supérieure à 150°C, notamment supérieure à 200°C.

Ce polymère thermoplastique est choisi préférentiellement dans le groupe constitué par les polyamides, les polyesters et les polyimides, plus particulièrement dans le groupe constitué par les polyamides aliphatiques et les polyesters. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides aliphatiques, on peut citer notamment les polyamides 4-6, 6, 6-6, 11 ou 12. Ce polymère thermoplastique est préférentiellement un polyamide aliphatique, plus préférentiellement un polyamide 6, 6-6 ou un polyamide 11.

Le deuxième constituant essentiel de la composition de polymère thermoplastique est un élastomère thermoplastique styrénique insaturé fonctionnalisé, porteur de groupes fonctionnels choisis parmi les groupes époxyde, carboxyle, anhydride ou ester d'acide. Préférentiellement, ces groupes fonctionnels sont des groupes époxyde, c'est-à-dire que l'élastomère thermoplastique est un élastomère époxydé.

La Tg (Tg₂) dudit élastomère est par définition négative, de préférence inférieure à - 10°C, plus préférentiellement inférieure à - 20°C.

Ainsi et selon un mode de réalisation préférentiel de l'invention, l'écart de températures de transition vitreuse (Tg₁ - Tg₂) entre le polymère thermoplastique et l'élastomère TPS insaturé est supérieur à 30°C, plus préférentiellement supérieur à 50°C.

On rappellera ici que les élastomères thermoplastiques styréniques (en abrégé "TPS") sont des élastomères thermoplastiques se présentant sous la forme de copolymères blocs à base de styrène. De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylènelbutylène).

C'est la raison pour laquelle, de manière connue, les copolymères TPS se caractérisent généralement par la présence de deux pics de transition vitreuse, le premier pic (température la plus basse, négative, correspondant à Tg₂) étant relatif à la séquence élastomère du copolymère TPS, le second pic (température la plus haute, positive, typiquement aux alentours de 80°C) étant relatif à la partie thermoplastique (blocs styrène) du copolymère TPS.

Ces élastomères TPS sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

Ceci étant rappelé, une caractéristique essentielle de l'élastomère TPS utilisé dans le renfort composite de l'invention est qu'il est insaturé. Par élastomère TPS insaturé, on entend par définition et de manière bien connue un élastomère TPS qui est pourvu d'insaturations éthyléniques, c'est-à-dire qui comporte des doubles liaisons carbone-carbone (conjuguées ou non) ; réciproquement, un élastomère TPS dit saturé est bien entendu un élastomère TPS qui est dépourvu de telles doubles liaisons.

Une deuxième caractéristique essentielle de cet élastomère TPS insaturé est qu'il est fonctionnalisé, porteur de groupes fonctionnels choisis parmi les groupes ou fonctions époxyde, les groupes carboxyles, anhydride ou ester d'acide. Selon un mode de réalisation particulièrement préférentiel, cet élastomère TPS est un élastomère époxydé, c'est-à-dire porteur d'au moins (c'est-à-dire un ou plusieurs) groupe(s) époxyde.

De préférence, l'élastomère insaturé est un copolymère comportant des blocs styrène (c'est-à-dire polystyrène) et des blocs diène (c'est-à-dire polydiène), notamment des blocs isoprène (polyisoprène) ou butadiène (polybutadiène) ; un tel élastomère est choisi en particulier dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Plus préférentiellement, cet élastomère insaturé est un copolymère du type triblocs choisi dans le groupe constitué par les copolymères blocs styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères ; plus particulièrement, il s'agit d'un SBS ou SIS, notamment d'un SBS.

Selon un autre mode de réalisation préférentiel de l'invention, le taux de styrène, dans l'élastomère TPS insaturé est compris entre 5 et 50%. En dehors du domaine indiqué, il existe un risque de voir l'effet technique visé, à savoir un compromis d'adhésion qui n'est plus optimal vis-à-vis d'une part de la couche du polymère thermoplastique, d'autre part de l'élastomère diénique auquel est destiné le renfort d'autre part. Pour ces raisons, le taux de styrène est plus préférentiellement compris entre 10 et 40%.

La masse moléculaire moyenne en nombre (notée Mn) de l'élastomère TPS est préférentiellement comprise entre 5 000 et 500 000 g/mol, plus préférentiellement comprise entre 7 000 et 450 000. La masse moléculaire moyenne en nombre (Mn) des élastomères TPS est déterminée de manière connue, par chromatographie d'exclusion stérique (SEC). L'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Des élastomères TPS insaturés et époxydés, tels que par exemple SBS époxydés, sont connus et disponibles commercialement, par exemple auprès de la société Daicel sous la dénomination "Epofriend".

La Tg des polymères thermoplastiques ci-dessus (Tg₁ et Tg₂) est mesurée de manière connue par DSC (*Differential Scanning Calorimetry*), par exemple et sauf indications différentes spécifiées dans la présente demande, selon la norme ASTM D3418 de 1999.

La figure 1 annexée représente de manière très schématique (sans respect d'une échelle spécifique), en coupe transversale, un premier exemple d'un renfort composite conforme à l'invention. Ce renfort composite noté R-1 est constitué d'un fil de renforcement (10) constitué d'un filament unitaire ou monofilament de diamètre relativement élevé (par exemple entre 0,10 et 0,50 mm), par exemple en acier au carbone, qui est recouvert d'une couche (11) comportant d'une part un polymère thermoplastique dont la Tg (Tg₁) est positive, par exemple en polyamide ou en polyester, et d'autre part un élastomère TPS insaturé fonctionnalisé, par exemple un SB, SBS, SBBS, SIS ou SBIS du type époxydé, dont la Tg (Tg₂) est négative ; l'épaisseur minimale de cette couche est notée Eₘ sur cette figure 1.

La figure 2 schématise en coupe transversale un deuxième exemple d'un renfort composite conforme à l'invention. Ce renfort composite noté R-2 est constitué d'un fil de renforcement (20) constitué en fait de deux filaments unitaires ou mono filaments (20a, 20b) de diamètre relativement élevé (par exemple entre 0,10 et 0,50 mm) retordus ou câblés ensemble, par exemple en acier au carbone ; le fil de renforcement (20) est recouvert d'une couche (21) d'épaisseur minimale Eₘ, comportant d'une part un polymère thermoplastique dont la Tg (Tg₁) est positive, par exemple en polyamide ou en polyester, et d'autre part un élastomère TPS insaturé fonctionnalisé, par exemple un SB, SBS, SBBS, SIS ou SBIS du type époxydé, dont la Tg (Tg₂) est négative.

La figure 3 schématise en coupe transversale un autre exemple de renfort composite selon l'invention. Ce renfort composite noté R-3 est constitué de trois fils de renforcement (30) constitués chacun de deux monofilaments (30a, 30b) de diamètre relativement élevé (par exemple entre 0,10 et 0,50 mm) retordus ou câblés ensemble, par exemple en acier au carbone ; l'ensemble constitué par les trois fils de renforcement (30) par exemple alignés est recouvert d'une couche (31) comportant d'une part un polymère thermoplastique dont la Tg (Tg₁) est positive, par exemple en polyamide ou en polyester, et d'autre part un élastomère TPS insaturé fonctionnalisé, par exemple SB, SBS, SBBS, SIS ou SBIS du type époxydé, dont la Tg (Tg₂) est négative.

La figure 4 schématise, toujours en coupe transversale, un autre exemple de renfort composite selon l'invention. Ce renfort composite R-4 comporte un fil de renforcement (40) consistant en un câble d'acier de construction 1+6, avec un fil central ou fil d'âme (41a) et six filaments (41b) de même diamètre enroulés ensemble en hélice autour du fil central. Ce câble ou fil de renforcement (40) est recouvert d'une couche (42) d'une composition de polymère comportant d'une part un polyamide et d'autre part un élastomère SBS fonctionnalisé, par exemple époxydé.

Dans les renforts composites conformes à l'invention tels que ceux schématisés par exemple dans les figures 1 à 4 ci-dessus, l'épaisseur minimale Eₘ de la gaine entourant le fil ou les fils de renforcement peut varier dans une très large mesure en fonction des conditions particulières de réalisation de l'invention. Elle est de préférence comprise entre 1 µm et 2 mm, plus préférentiellement entre 10 µm et 1 mm.

Dans le cas où plusieurs fils de renforcement (notamment plusieurs câbles) sont utilisés, la couche ou gaine d'enrobage peut être déposée individuellement sur chacun des fils de renforcement (notamment sur chacun des câbles) (pour rappel, que ces fils de renforcement soit unitaires ou pas), comme illustré par exemple aux figures 1, 2 et 4 commentées précédemment, ou bien déposée collectivement sur plusieurs des fils de renforcement (notamment sur plusieurs des câbles) disposés de manière appropriée, par exemple alignés selon une direction principale, comme illustré par exemple à la figure 3.

Le renfort composite de l'invention est préparé selon un procédé spécifique comportant au moins l'étape selon laquelle on soumet au moins un (c'est-à-dire un ou plusieurs) fil de renforcement à une opération de gainage, préférentiellement par passage à travers une tête d'extrusion, par la couche de composition polymère thermoplastique précédemment décrite comportant le polymère thermoplastique dont la Tg (Tg₁) est positive et l'élastomère thermoplastique styrénique insaturé dont la Tg (Tg₂) est négative.

L'étape de gainage ci-dessus est conduite de manière connue de l'homme du métier, en ligne et en continu ; elle consiste par exemple simplement à faire passer le fil de renforcement, à travers des filières de diamètre adapté, dans une tête d'extrusion chauffée à une température appropriée.

Selon un mode de réalisation préférentiel, le ou les fils de renforcement sont préalablement chauffés, par exemple par induction ou par rayonnement IR, avant passage dans la tête d'extrusion. En sortie de la tête d'extrusion, le ou les fils de renforcement ainsi gainés sont ensuite refroidis suffisamment de manière à solidifier la couche de polymère, par exemple avec de l'air ou un autre gaz froid, ou par passage dans un bain d'eau suivi d'une étape de séchage.

Le renfort composite conforme à l'invention ainsi obtenu peut subir optionnellement un traitement thermique, directement en sortie d'extrusion ou ultérieurement après refroidissement.

A titre d'exemple, pour l'obtention d'un fil de renforcement gainé ayant un diamètre total d'environ 1 mm, le recouvrement d'un fil de renforcement de diamètre proche de 0,6 mm, par exemple d'un câble métallique constitué simplement de deux monofils élémentaires de diamètre 0,3 mm torsadés ensemble (comme illustré par exemple à la figure 2), par une couche d'une composition de polyamide 11 ou de polyamide 6 et d'élastomère SBS du type époxydé (rapport pondéral 85/15), d'épaisseur maximale égale à environ 0,4 mm, est réalisé sur une ligne d'extrusion-gainage comportant deux filières, une première filière (contre-filière ou filière amont) de diamètre égal à environ 0,65 mm et une seconde filière (ou filière aval) de diamètre égal à environ 0,95 mm, disposées toutes deux dans une tête d'extrusion portée à environ 230°C. Le mélange de polyamide et d'élastomère TPS époxydé, fondu à une température de 230°C dans l'extrudeuse, recouvre ainsi le câble, par le biais de la tête de gainage, à une vitesse de défilement du fil égale typiquement à plusieurs dizaines de m/min, pour un débit de pompe d'extrusion typiquement de plusieurs dizaines de g/min. En sortie de ce gainage, le câble peut être immergé dans un bac rempli d'eau froide, pour refroidissement avant passage de la bobine de réception à l'étuve pour séchage.

Pour l'étape de gainage décrite ci-dessus, le câble (fil de renforcement) est avantageusement préchauffé avant passage dans la tête d'extrusion, par exemple par passage à travers un générateur HF ou à travers un tunnel chauffant.

A l'issue de cette opération de gainage, par exemple directement en sortie de la tête de gainage, le renfort composite peut traverser par exemple un four-tunnel, par exemple de plusieurs mètres de long, pour y subir un traitement thermique sous air. Cette température de traitement est par exemple comprise entre 150°C et 300°C, pour des durées de traitement de quelques secondes à quelques minutes selon les cas (par exemple entre 10 s et 10 min), étant entendu que la durée du traitement sera d'autant plus courte que la température sera élevée, et que le traitement thermique ne doit évidemment pas conduire à une refusion ou même un ramollissement excessif des matières thermoplastiques utilisées. Ainsi terminé, le renfort composite de l'invention est avantageusement refroidi, par exemple à l'air, pour éviter des problèmes de collage parasite lors de son enroulement sur la bobine de réception finale.

L'homme du métier saura ajuster, le cas échéant, la température et la durée du traitement thermique optionnel ci-dessus, en fonction des conditions particulières de mise en oeuvre de l'invention, notamment de la nature exacte du renfort composite fabriqué, en particulier selon que l'on traite des monofilaments pris individuellement, des câbles constitués de plusieurs monofilaments ou des groupes de tels monofilaments ou câbles tels que des bandelettes. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Les étapes du procédé de l'invention précédemment décrites peuvent être avantageusement complétées par un traitement final de réticulation tridimensionnelle du renfort, pour renforcer encore la propre cohésion de sa gaine, notamment dans les cas où ce renfort composite est destiné à une utilisation ultérieure à une température relativement élevée, typiquement supérieure à 100°C.

Cette réticulation pourra être conduite par tout moyen connu, par exemple par des moyens de réticulation physiques tels que bombardement ionique ou électronique, ou par des moyens de réticulation chimiques, par exemple en introduisant un agent réticulant (par exemple huile de lin) dans la composition de polymère thermoplastique et d'élastomère TPS, par exemple au cours de son extrusion, ou encore en introduisant dans cette composition un système de vulcanisation (c'est-à-dire un système de réticulation à base de soufre).

Une réticulation pourra être également obtenue lors de la cuisson des bandages pneumatiques (ou plus généralement des articles en caoutchouc) que le renfort composite de l'invention est destiné à renforcer, grâce au propre système de réticulation présent dans les compositions de caoutchouc diénique constitutives de tels bandages (ou articles) et entrant au contact du renfort composite de l'invention.

Le renfort composite de l'invention est utilisable directement, c'est-à-dire sans nécessiter un quelconque système adhésif supplémentaire, comme élément de renforcement d'une matrice de caoutchouc diène, par exemple dans un bandage pneumatique. Il est avantageusement utilisable pour le renforcement de bandages pneumatiques de tous types de véhicules, en particulier véhicules tourisme ou véhicules industriels tels que Poids-lourd.

A titre d'exemple, la figure 5 annexée représente de manière très schématique (sans respect d'une échelle spécifique), une coupe radiale d'un bandage pneumatique conforme à l'invention pour véhicule du type tourisme.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce bandage pneumatique 1 de l'invention a par exemple pour caractéristique essentielle qu'au moins une de ses armature de sommet ou de carcasse comporte un renfort composite selon l'invention. Selon un autre exemple de mode de réalisation possible de l'invention, ce sont par exemple les tringles 5 qui pourraient être constituées d'un renfort composite selon l'invention.

### EXEMPLES DE REALISATION DE L'INTENTION

### Essai 1 - Fabrication des renforts composites

On fabrique tout d'abord des renforts composites conformes à l'invention, de la manière suivante. Le fil de renforcement de départ est un câble d'acier (dit *"steel cord"*) pour bandages pneumatiques (acier standard à 0,7% en poids de carbone), de construction 1x2 constitué de deux fils élémentaires ou monofils de diamètre 0,30 mm retordus ensemble selon un pas d'hélice de 10 mm. Son diamètre est de 0,6 mm.

Le recouvrement de ce câble par un mélange d'une part de polyamide 6 (« Ultramid » B33 de la société BASF ; température de fusion Tf égale à environ 220°C), et d'autre part de SBS époxydé (« Epofriend » AT501 de la société Daicel) est réalisé sur une ligne d'extrusion-gainage par passage à travers une tête d'extrusion portée à une température de 230°C et comportant deux filières, une filière amont de diamètre 0,63 mm et une filière aval de diamètre 0,92 mm. Le mélange thermoplastique constitué du polyamide 6 (débit de pompe de 48 g/min) et du SBS époxydé (débit de pompe de 12 g/min) est porté à une température de 230°C et recouvre ainsi le fil (préchauffé à environ 280-290°C par passage à travers un générateur HF) défilant à une vitesse de 60 m/min. En sortie de la tête de gainage, le renfort composite obtenu est immergé en continu dans un bac de refroidissement rempli d'eau à 5°C pour refroidir sa gaine thermoplastique, puis séché par une buse d'air.

Les températures de transition vitreuse, Tg₁ et Tg₂, des deux types de polymères utilisés ci-dessus sont respectivement égales à environ + 45°C et - 95°C (par exemple mesurées selon le mode opératoire qui suit : appareil DSC "822-2" de Mettler Toledo ; atmosphère Hélium ; échantillons préalablement portés de la température ambiante (20°C) à 100°C (20°C/min), puis refroidis rapidement jusqu'à -140°C, avant enregistrement final de la courbe de DSC de -140°C à +250°C à 20°C/min).

A l'issue de ce gainage, dans ces exemples, on soumet l'ensemble à un traitement thermique d'une durée d'environ 100 s, par passage à 3 m/min dans un four-tunnel, sous atmosphère ambiante (air), porté à une température de 270°C. On obtient ainsi des renforts composites conformes à l'invention (Renforts R-2 tels que schématisés à la figure 2), constitués du câble d'acier de départ gainé de sa couche de polyamide et d'élastomère (SBS époxydé) dont les propriétés d'adhésion sont optimales.

Dans l'essai ci-dessus, pour déterminer les meilleures conditions opératoires du traitement thermique, on a réalisé préalablement un balayage en température de 160°C à 280°C, pour quatre durées de traitement (50 s, 100 s, 200 s et 400 s).

### Essai 2 - Tests d'adhésion

La qualité de la liaison entre le caoutchouc et les renforts composites précédemment fabriqués est ensuite appréciée par un test dans lequel on mesure la force nécessaire pour extraire les renforts d'une composition de caoutchouc vulcanisée, dit encore vulcanisat. Cette composition de caoutchouc est une composition conventionnelle utilisée pour le calandrage de nappes métalliques de ceinture de pneumatique, à base de caoutchouc naturel, de noir de carbone et des additifs usuels.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les renforts composites (15 brins au total) sont emprisonnés entre les deux plaques de caoutchouc à l'état cru, à égale distance et en laissant dépasser de part et d'autre de ces plaques une extrémité de renfort composite de longueur suffisante pour la traction ultérieure. Le bloc comportant les renforts est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min, sous une pression de 16 bars.

A l'issue de la cuisson, l'éprouvette ainsi constituée du bloc vulcanisé et des 15 renforts est mise en place dans les mâchoires d'une machine de traction adaptée pour permettre de tractionner chaque renfort isolément hors du caoutchouc, à une vitesse et une température données (par exemple, dans le cas présent, à 50 mm/min et 20°C). On caractérise les niveaux d'adhésion en mesurant la force dite d'arrachage (notée Fₘₐₓ) pour arracher les renforts de l'éprouvette (moyenne sur 15 tractions).

On a constaté que le renfort composite de l'invention, malgré le fait qu'il soit dépourvu de colle RFL (ou toute autre colle), présentait une force d'arrachage Fₘₐₓ particulièrement inattendue et élevée, égale à environ 3 fois (+270%) la force d'arrachage de référence mesurée sur un renfort composite témoin gainé simplement de polyamide 6 et encollé avec une colle conventionnelle RFL, ce qui constitue un résultat remarquable pour l'homme du métier.

Dans les mêmes conditions, un renfort composite témoin gainé simplement de polyamide 6 (sans élastomère SBS), mais dépourvu de colle RFL (ou toute autre colle), présentait une adhésion nulle au caoutchouc (force d'arrachage égale pratiquement à zéro).

Des essais complémentaires ont démontré par ailleurs que l'utilisation de l'élastomère TPS insaturé (SBS époxydé), non pas comme constituant de la couche de gainage mais comme additif incorporé à la composition de caoutchouc de calandrage (donc toujours au contact du renfort composite), n'apportait aucune contribution adhésive.

En conséquence, le renfort composite de l'invention par son caractère auto-adhérent constitue une alternative particulièrement intéressante, et tout à fait crédible compte tenu des niveaux d'adhésion obtenus, aux renforts composites de l'art antérieur gainés par une matière thermoplastique telle que polyamide ou polyester, nécessitant de manière connue l'emploi d'une colle du type RFL pour assurer leur adhésion au caoutchouc.

## Revendications

1. Renfort composite comportant :
- un ou plusieurs fil(s) de renforcement ;
- recouvrant ledit fil, individuellement chaque fil ou collectivement plusieurs fils, une couche d'une composition polymère thermoplastique comportant d'une part un polymère thermoplastique dont la température de transition vitreuse est positive,
**caractérisé en ce que** la couche de la composition polymère thermoplastique comporte d'autre part un élastomère thermoplastique styrénique insaturé fonctionnalisé, dont la température de transition vitreuse est négative, ledit élastomère étant porteur de groupes fonctionnels choisis parmi les groupes époxyde, carboxyle, anhydride ou ester d'acide.

2. Renfort selon la revendication 1, dans lequel la température de transition vitreuse du polymère thermoplastique est supérieure à +20°C.

3. Renfort selon la revendication 1 ou 2, dans lequel la température de transition vitreuse de l'élastomère thermoplastique styrénique insaturé est inférieure à -10°C.

4. Renfort selon l'une quelconque des revendications 1 à 3, dans lequel le polymère thermoplastique est un polyamide aliphatique ou un polyester.

5. Renfort selon la revendication 4, dans lequel le polymère thermoplastique est un polyamide 6 ou un polyamide 11.

6. Renfort selon l'une quelconque des revendications 1 à 5, dans lequel l'élastomère thermoplastique est un copolymère comportant des blocs styrène et des blocs diène.

7. Renfort selon la revendication 6, dans lequel les blocs diène sont des blocs isoprène ou butadiène.

8. Renfort selon la revendication 7, dans lequel l'élastomère thermoplastique est choisi dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

9. Renfort selon la revendication 98, dans lequel l'élastomère thermoplastique est un copolymère SBS ou SIS, de préférence un copolymère SBS.

10. Renfort selon l'une quelconque des revendications 1 à 9, dans lequel l'élastomère thermoplastique est un élastomère époxydé.

11. Renfort selon l'une quelconque des revendications 1 à 10, dans lequel le fil de renforcement est un fil métallique.

12. Renfort selon la revendication 11, dans lequel le fil métallique est un fil en acier au carbone.

13. Article ou produit semi-fini en caoutchouc comportant un renfort composite selon l'une quelconque des revendications 1 à 12.

14. Bandage pneumatique comportant un renfort composite selon l'une quelconque des revendications 1 à 12.

15. Procédé de fabrication d'un renfort composite selon l'une quelconque des revendications 1 à 12, **caractérisé en ce qu'**on gaine individuellement le fil ou chaque fil de renforcement, ou collectivement plusieurs fils de renforcement, par une couche de composition polymère thermoplastique comportant d'une part un polymère thermoplastique dont la température de transition vitreuse est positive, d'autre part un élastomère thermoplastique styrénique insaturé fonctionnalisé, dont la température de transition vitreuse est négative, ledit élastomère étant porteur de groupes fonctionnels choisis parmi les groupes époxyde, carboxyle, anhydride ou ester d'acide.

## Patentansprüche

1. Verbundverstärkung, umfassend:
- einen oder mehrere Verstärkungsfäden;
- eine den Faden bzw. jeden Faden einzeln bzw. mehrere Fäden zusammen bedeckende Schicht aus einer thermoplastischen Polymerzusammensetzung, die einerseits ein thermoplastisches Polymer, dessen Glasübergangstemperatur positiv ist, umfasst,
**dadurch gekennzeichnet, dass** die Schicht aus der thermoplastischen Polymerzusammensetzung andererseits ein funktionalisiertes ungesättigtes thermoplastisches Styrolelastomer, dessen Glasübergangstemperatur negativ ist, umfasst, wobei das Elastomer aus Epoxid-, Carboxyl-, Anhydrid- oder Säureestergruppen ausgewählte funktionelle Gruppen trägt.

2. Verstärkung nach Anspruch 1, wobei die Glasübergangstemperatur des thermoplastischen Polymers größer als +20°C ist.

3. Verstärkung nach Anspruch 1 oder 2, wobei die Glasübergangstemperatur des ungesättigten thermoplastischen Styrolelastomers kleiner als -10°C ist.

4. Verstärkung nach einem der Ansprüche 1 bis 3, wobei es sich bei dem thermoplastischen Polymer um ein aliphatisches Polyamid oder einen Polyester handelt.

5. Verstärkung nach Anspruch 4, wobei es sich bei dem thermoplastischen Polymer um ein Polyamid 6 oder ein Polyamid 11 handelt.

6. Verstärkung nach einem der Ansprüche 1 bis 5, wobei es sich bei dem thermoplastischen Elastomer um ein Copolymer mit Styrolblöcken und Dienblöcken handelt.

7. Verstärkung nach Anspruch 6, wobei es sich bei den Dienblöcken um Isopren- oder Butadienblöcke handelt.

8. Verstärkung nach Anspruch 7, wobei das thermoplastische Elastomer aus der Gruppe bestehend aus Styrol/Butadien(SB)-, Styrol/Isopren(SI)-, Styrol/Butadien/Butylen- (SBB)-, Styrol/Butadien/Isopren(SBI)-, Styrol/Butadien/Styrol(SBS)-, Styrol/Butadien/Butylen/Styrol(SBBS)-, Styrol/Isopren/Styrol(SIS)-, Styrol/Butadien/Isopren/Styrol(SBIS)-Blockcopolymeren und Mischungen dieser Copolymere ausgewählt ist.

9. Verstärkung nach Anspruch 8, wobei es sich bei dem thermoplastischen Elastomer um ein SBS- oder SIS-Copolymer, vorzugsweise ein SBS-Copolymer, handelt.

10. Verstärkung nach einem der Ansprüche 1 bis 9, wobei es sich bei dem thermoplastischen Elastomer um ein epoxidiertes Elastomer handelt.

11. Verstärkung nach einem der Ansprüche 1 bis 10, wobei es sich bei dem Verstärkungsfaden um einen Metallfaden handelt.

12. Verstärkung nach Anspruch 11, wobei es sich bei dem Metallfaden um einen Faden aus unlegiertem Stahl handelt.

13. Artikel oder Halbzeug aus Kautschuk, umfassend eine Verbundverstärkung nach einem der Ansprüche 1 bis 12.

14. Luftreifen, umfassend eine Verbundverstärkung nach einem der Ansprüche 1 bis 12.

15. Verfahren zur Herstellung einer Verbundverstärkung nach einem der Ansprüche 1 bis 12, **dadurch gekennzeichnet, dass** man den Verstärkungsfaden bzw. jeden Verstärkungsfaden einzeln oder mehrere Verstärkungsfäden zusammen mit einer Schicht aus einer thermoplastischen Polymerzusammensetzung, die einerseits ein thermoplastisches Polymer, dessen Glasübergangstemperatur positiv ist, und andererseits ein funktionalisiertes ungesättigtes thermoplastisches Styrolelastomer, dessen Glasübergangstemperatur negativ ist, umfasst, wobei das Elastomer aus Epoxid-, Carboxyl-, Anhydrid- oder Säureestergruppen ausgewählte funktionelle Gruppen trägt, bedeckt.

## Claims

1. Composite reinforcer comprising:
- one or more reinforcing thread(s);
- covering said thread, individually each thread or collectively several threads, a layer of a thermoplastic polymer composition comprising on the one hand a thermoplastic polymer, the glass transition temperature of which is positive,
**characterized in that**, the thermoplastic polymer composition comprises, on the other hand, a functionalized unsaturated thermoplastic styrene elastomer, the glass transition temperature of which is negative, said elastomer containing functional groups selected from epoxide, carboxyl and acid anhydride or ester groups.

2. Reinforcer according to Claim 1, in which the glass transition temperature of the thermoplastic polymer is above +20°C.

3. Reinforcer according to Claim 1 or 2, in which the glass transition temperature of the unsaturated thermoplastic styrene elastomer is below -10°C.

4. Reinforcer according to any one of Claims 1 to 3, in which the thermoplastic polymer is an aliphatic polyamide or a polyester.

5. Reinforcer according to Claim 4, in which the thermoplastic polymer is a polyamide 6 or a polyamide 11.

6. Reinforcer according to any one of Claims 1 to 5, in which the thermoplastic elastomer is a copolymer comprising styrene blocks and diene blocks.

7. Reinforcer according to Claim 6, in which the diene blocks are isoprene or butadiene blocks.

8. Reinforcer according to Claim 7, in which the thermoplastic elastomer is selected from the group consisting of styrene/butadiene (SB), styrene/isoprene (SI), styrene/butadiene/butylene (SBB), styrene/butadiene/isoprene (SBI), styrene/butadiene/styrene (SBS), styrene/butadiene/butylene/styrene (SBBS), styrene/isoprene/styrene (SIS), styrene/butadiene/isoprene/styrene (SBIS) block copolymers and blends of these copolymers.

9. Reinforcer according to Claim 8, in which the thermoplastic elastomer is an SBS or SIS copolymer, preferably an SBS copolymer.

10. Reinforcer according to any one of Claims 1 to 9, in which the thermoplastic elastomer is an epoxidized elastomer.

11. Reinforcer according to any one of Claims 1 to 10, in which the reinforcing thread is a metal wire.

12. Reinforcer according to Claim 11, in which the metal wire is a carbon steel wire.

13. Rubber article or semi-finished product comprising a composite reinforcer according to any one of Claims 1 to 12.

14. Pneumatic tyre comprising a composite reinforcer according to any one of Claims 1 to 12.

15. Process for manufacturing a composite reinforcer according to any one of Claims 1 to 12, **characterized in that** individually the reinforcing thread or each reinforcing thread, or collectively several reinforcing threads, is/are sheathed with a layer of thermoplastic polymer composition comprising on the one hand a thermoplastic polymer, the glass transition temperature of which is positive, on the other hand a functionalized unsaturated thermoplastic styrene elastomer, the glass transition temperature of which is negative, said elastomer containing functional groups selected from epoxide, carboxyl and acid anhydride or ester groups.
